Europäisches Patentamt

European Patent Office

Office européen des brevets

(11) Veröffentlichungsnummer: **0 278 345**
**A2**

## EUROPÄISCHE PATENTANMELDUNG

(21) Anmeldenummer: 88101364.3

(51) Int. Cl.4: **A01M 29/00**

(22) Anmeldetag: 30.01.88

(30) Priorität: 10.02.87 DE 3703986

(43) Veröffentlichungstag der Anmeldung:
17.08.88 Patentblatt 88/33

(84) Benannte Vertragsstaaten:
AT BE CH DE ES FR GB GR IT LI LU NL SE

(71) Anmelder: Kolbatz, Klaus-Peter
Langenauerweg 21
D-1000 Berlin 27(DE)

(72) Erfinder: Kolbatz, Klaus-Peter
Langenauerweg 21
D-1000 Berlin 27(DE)

(74) Vertreter: Wablat, Wolfgang
Patentanwalt Dr.-Ing. Dr. jur. Dipl.-Chem. W.
Wablat Potsdamer Chaussee 47
D-1000 Berlin 38(DE)

(54) Verfahren zur körpernahen Mückenabwehr.

(57) Die Erfindung beschreibt ein Verfahren und eine Vorrichtung zur körpernahen Mückenabwehr, bei dem je nach verwendeter Flüssigkeit die darauf abschreckenden Insekten vertrieben werden.

Dies erfolgt dadurch, daß in einen Behälter (1), welcher am Körper getragen wird, z. B. als Amulett oder ähnlichem, eine jeweilige Flüssigkeit für das gewünschte zu vertreibende Insekt gefüllt wird, und über in dem Behälter befindliche Schlitze (2), Löcher als schützenden Duft an die Umgebung abgegeben wird.

Durch die eigene Körpertemp eratur wird die Verteilung des Insekten abschreckenden Duftes dann noch verstärkt.

Fig. 1

## Verfahren zur körpernahen Mückenabwehr

Die Erfindung geht von einem Stand der Technik aus, wie er sich aus der DE-OS 25 48 707 ergibt.

Ihr liegt die Aufgabe zugrunde, ein Verfahren und eine Vorrichtung zu seiner Durchführung zu schaffen, wobei keinerlei Flüssigkeiten zu Insektenabwehr die menschliche Haut belasten können und somit eine Allergiegefahr auf ein Minimum gesenkt wird.

Diese Aufgabe wird erfindungsgemäß durch die im Kennzeichen des Anspruchs 1 angegebenen Maßnahmen gelöst, wobei die Ansprüche 2-4 eine Vorrichtung zur Durchführung des Verfahrens betreffen.

Ein Ausführungsbeispiel der Erfindung ist in der Zeichnung dargestellt und wird nachfolgend näher beschrieben.

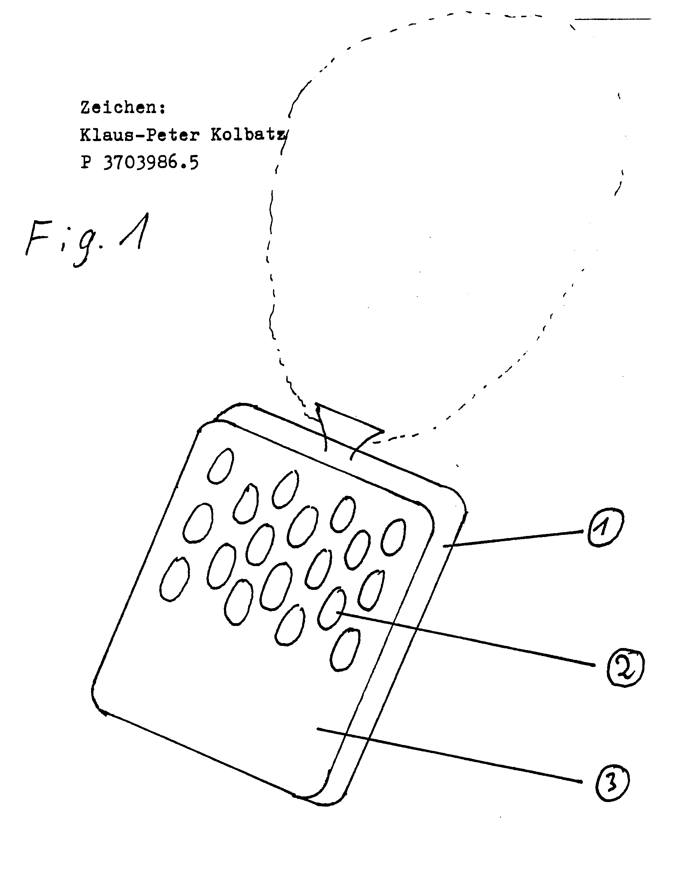

Wie aus Fig. 1 ersichtlich ist, besteht das Gehäuse (1) aus einem hautverträglichem Material, welches an der Vorderseite (3), also der körperabgewandten Seite, mit Schlitzen (2) versehen ist, die dazu dienen, den Insekten abschreckenden Duft entweichen zu lassen. Im Inneren des Gehäuses befindet sich eine Flüssigkeit aufsaugendes Material z.B. Filz oder Watte oder ähnliches, das dazu dient, die im Behälter (1) befindliche Flüssigkeit aufzusaugen und den Duft auf einer entsprechend größeren Fläche austreten zu lassen.

Zweckmäßigerweise wird der Behälter (1) auf der nackten Haut getragen, da dadurch die Verdampfung und somit der Effekt verstärke wird.

Je nach Flüssigkeitsmaterial und gewünschter Intensität kann das Gehäuse auch mit einer Miniheizung versehen werden.

Da die Insekten abschreckende Flüssigkeit austauschbar ist, kann der Behälter (1) auch für andere Zwecke verwendet werden z.B. für Duftstoffe (Parfüm).

## Ansprüche

1. Verfahren zur körpernahen Mückenabwehr, dadurch gekennzeichnet, daß ein am Körper getragenes Amulett als Anhänger oder als Armband oder dergleichen mit Flüssigkeit versehen wird, welche durch die Einwirkung der Körperwärme oder einer Miniheizung verdunstet.

2. Vorrichtung zur Durchführung des Verfahrens nach Anspruch 1, dadurch gekennzeichnet, daß ein Behälter (1) mit einem Flüssigkeitsaufsaugenden Material versehen ist in Form von Filz, Watte oder ähnlichem.

3. Vorrichtung nach Anspruch 2, dadurch gekennzeichnet, daß der Behälter (1) mit einer Mücken abschreckenden Flüssigkeit gefüllt werden kann.

4. Vorrichtung nach Anspruch 2, dadurch gekennzeichnet, daß der Behälter (1) mit Parfüm gefüllt als Schmuckstück getragen werden kann.

Zeichen:
Klaus-Peter Kolbatz
P 3703986.5

Fig. 1

① ② ③

Klaus-Peter Kolbatz